# EUROPÄISCHE PATENTANMELDUNG

(11) **EP 0 992 368 A2**
(43) Veröffentlichungstag der Anmeldung: **12.04.2000**
(21) Anmeldenummer: 99115459.2
(22) Anmeldetag: 05.08.1999
(51) Int. Cl.: B60B 33/00

(54) **Rolle mit Hubeinrichtung und Aufstandseinrichtung zur Festsetzung**

(30) Priorität: 07.10.1998 DE 19846161
(71) Anmelder: SIGNODE BERNPAK GmbH, D-46535 Dinslaken (DE)
(72) Erfinder: Schurig, Karl, 42897 Remscheid (DE)
(74) Vertreter: Patentanwälte Ostriga & Sonnet

(57) **Zusammenfassung**

Die Erfindung betrifft eine Rolle (1) mit Lagerachse (2), auf welcher in einem Rollengehäuse (3) ein Laufrad (4) drehbar gelagert ist, das zur Festsetzung gemeinsam mit seiner Lagerachse (2) und dem Gehäuse (3) über eine Hubeinrichtung (5) in eine Übertotpunktlage von ihrer Laufebene (8) anzuheben und zugleich über dieselbe Hubeinrichtung (5) eine an dem Gehäuse (3) angebrachte Aufstandseinrichtung (6) mit ihrer Standfläche (7) auf die Laufebene (8) abzusenken ist.

Der Erfindung liegt die Aufgabe zugrunde, eine Rolle dieser Art zu schaffen, die bei einfach zu betätigender Hubeinrichtung und erheblich höherer Belastbarkeit eine zufällige Lösung der Rolle nach ihrer Festsetzung sicher ausschließt.

Diese Aufgabe wird erfindungsgemäß dadurch gelöst, daß die Hubeinrichtung (5) aus zwei an beiden Enden (2a, 2b) der Lagerachse (2) drehfest mit ihr verbundenen Exzentern (20, 21) besteht, von denen ein jeder formschlüssig in eine entsprechende kreisrunde oder ovale Ausnehmung (22, 23) je einer Schenkelplatte (24, 25) der Aufstandseinrichtung (6) eingreift und mindestens einer der Exzenter (20) für zwei stabile Übertotpunktlagen zwei definierte Anschlagflächen (26, 27) aufweist.

## Beschreibung

Die Erfindung betrifft eine Rolle mit Lagerachse, auf welcher in einem Rollengehäuse ein Laufrad drehbar gelagert ist, welches zur Festsetzung gemeinsam mit seiner Lagerachse und dem Gehäuse über eine Hubeinrichtung in eine Übertotpunktlage von ihrer Laufebene anzuheben und zugleich über dieselbe Hubeinrichtung eine an dem Gehäuse angebrachte Aufstandseinrichtung mit ihrer Standfläche auf die Laufebene abzusenken ist.

Eine bekannte Rolle dieser Art gemäß dem DE-GM 87 00 869.6 U1 weist zwei an den beiden Enden einer Lagerachse angeordnete Laufräder auf, zwischen denen ein zweiarmiger sowie ein damit zusammenwirkender einarmiger Hebel der Hubeinrichtung derart angeordnet sind, daß bei Niederdrücken einer Pedalfläche des zweiarmigen Hebels im Uhrzeigersinn der mit einer Standfläche versehene einarmige Hebel auf die Laufebene niedergedrückt und zugleich die Rolle gemeinsam mit ihrer Lagerachse und dem Gehäuse in eine instabile Übertotpunktlage angehoben wird. Bereits bei einem geringen Stoß gegen die Pedalfläche des zweiarmigen, mit seinem freien Betätigungsende über die Außenumfangskontur der Laufräder hinausragenden Hebels kann dieser entgegengesetzt zum Uhrzeigersinn nach oben schwenken und die instabile Übertotpunktlage gelöst werden. Neben ihrem komplizierten und störungsanfälligen Aufbau weist diese Rolle außer einer störenden Optik eine relativ kleine Standfläche mit hoher Druckbelastung auf. Aus diesem Grunde ist sie nur für geringe Lasten, beispielsweise für die in dieser Vorveröffentlichung angegebenen Ladeneinrichtungen in Form von fahrbaren Kleidergestellen, verwendbar. Zur Aufnahme von großen Lasten, beispielsweise von 100 kg bis 350 kg je Rolle, wie sie bei Verpackungsmaschinen üblich sind, dürften diese Rollen sicherlich nicht geeignet sein.

Von diesem Stand der Technik ausgehend, liegt der Erfindung die Aufgabe zugrunde, eine Rolle der eingangs genannten Gattung zu schaffen, die bei erheblich höherer Belastbarkeit ein zufälliges Lösen der Rolle nach ihrer Festsetzung sicher ausschließt und bei einfachem Aufbau eine stabile hoch belastbare Aufstandseinrichtung mit einer einfach zu betätigenden Hubeinrichtung gewährleistet.

Diese Aufgabe wird in Verbindung mit dem eingangs genannten Gattungsbegriff erfindungsgemäß dadurch gelöst, daß die Hubeinrichtung aus zwei an beiden Enden der Lagerachse drehfest mit ihr verbundenen Exzentern besteht, von denen ein jeder formschlüssig in eine entsprechende kreisrunde oder ovale Ausnehmung je einer Schenkelplatte der Aufstandseinrichtung eingreift und mindestens einer der Exzenter für zwei stabile Übertotpunktlagen zwei definierte Anschlagflächen aufweist, die über die Lagerachse in entgegengesetzten Drehrichtungen gegen einen Anschlagvorsprung auf einer der Schenkelplatten drehbar sind. Mit dieser Anordnung können durch einfaches Drehen der Lagerachse die in die beiden entgegengesetzten Drehrichtungen beweglichen Exzenter in zwei stabile Übertotpunktlagen verschwenkt werden, von denen die eine die angehobene Stellung der Rolle und die andere abgesenkte Stellung der Rolle definiert. Da die Schenkelplatten je nach den zu erwartenden Drücken an ihrer Standfläche mit einer großen und höchst unterschiedlich konfigurierten Fläche versehen werden können, ist diese Rolle nicht nur für die Aufnahme von hohen Belastungen geeignet, sondern kann sowohl als Bockrolle als auch - wie beim Stand der Technik - bei Versehung mit einem Drehkranz als Lenkrolle fungieren.

Nach einer vorteilhaften Weiterbildung der Erfindung besteht die Aufstandseinrichtung aus zwei zu beiden Seiten des Gehäuses auf der Lagerachse angeordneten Schenkelplatten, die jeweils mit einer relativ langen Standfläche der Laufebene zugekehrt sind und in deren Nähe an zwei über die jeweilige Außenumfangskontur des Laufrades hinausragenden Enden über Verbindungsbolzen zu einem stabilen sowie relativ großflächigen Aufstandschuh verbunden sind. Durch diese Ausbildung entsteht ein stabiles Fachwerk zur Aufnahme hoher Lasten, welches von den Exzentern rasch angehoben und ebenso rasch abgesenkt werden kann. Diesem Aufstandschuh kommt außerdem eine Schutzfunktion in dem Sinne zu, daß die Füße von Personen nicht mehr von dem oder den Laufrädern einer Rolle erfaßt oder überrollt werden können. Vorstehende Teile, über welche durch zufällig einwirkende Kräfte die Exzenter aus ihrer Übertotpunktlage verschwenkt werden könnten, sind nicht vorhanden.

Zur Erstellung einer noch stabileren Aufstandsfläche bilden die Verbindungsbolzen mit ihrem Außenumfang in der Aufstandslage einen Teil der Standfläche der Aufstandseinrichtung. Die Verbindungsbolzen sind vorteilhaft mit einem reibungserhöhenden, entropieelastischen Belag versehen, der in der abgesenkten Stellung des Aufstandschuhs zusammengepreßt ist. Dadurch wird die Friktion zwischen dem Aufstandschuh und der Laufebene erheblich vergrößert.

Nach einer alternativen Ausführungsform sind die Verbindungsbolzen mit Abstand über der Laufebene angeordnet und bilden eine Trag- und Schwenkachse für je einen weiteren, kleineren, daran pendelnd aufgehängten Aufstandschuh, der beispielsweise aus Hartgummi oder einem verschleißfesten Kunststoff hergestellt werden kann. Dadurch können Bodenunebenheiten speziell auf schiefen Ebenen in einacher Weise ausgeglichen werden.

Nach einer vorteilhaften Weiterbildung der Erfindung weisen die Schenkelplatten der Aufstandseinrichtung eine Dreieck- oder Trapezform mit abgerundeten Eckenbereichen auf und sind an der Außenfläche des Gehäuses mit ihren kreisrunden oder ovalen Ausnehmungen beweglich auf den Exzentern angeordnet sowie von diesen anhebbar und absenkbar. Um dieses Absenken und Anheben nicht willkürlich erfolgen zu lassen, ist die Lagerachse an mindestens einem Ende mit einem im Querschnitt mehreckigen Betätigungszapfen, der sowohl ein Dreikant, ein Vierkant oder ein Sechskant sein kann, zum Ansatz eines Schraubschlüssels oder einer Ratsche versehen, mit deren Hilfe eine rasche Anhebung oder Absenkung des Aufstandschuhs über die Exzenter erfolgen kann.

Das Gehäuse der Rolle weist eine an sich bekannte im Querschnitt U-Form auf, deren freie Enden der U-Schenkel die Lagerachse an ihren beiden Endbereichen aufnehmen und deren Quersteg mit einem an sich bekannten Drehkranz mit Feststellungshebel versehen ist. Durch diese Anordnung des Drehkranzes mit dem Feststellungshebel kann eine solche Rolle vorteilhaft als Lenkrolle verwendet werden. Ohne Drehkranz findet diese Rolle als Bockrolle Verwendung.

Nach einer vorteilhaften Weiterbildung der Erfindung ragt einer der Exzenter über die Außenfläche der ihm zugeordneten Schenkelplatte des Aufstandschuhs hinaus und ist an diesem herausragenden Teil mit den beiden Anschlagflächen für die zwei stabilen Übertotpunktlagen versehen.

Der mit den beiden Anschlagflächen zusammenwirkende Anschlagvorsprung besteht vorteilhaft aus einem über die Außenfläche der Schenkelplatte mit dem hinausragenden Exzenter vorspringenden Anschlagstift, der in einer Bohrung dieser Schenkelplatte des Aufstandschuhs eingepreßt, eingenietet oder eingeschraubt ist. Zur höhenverstellbaren Ausrichtung der von der Rolle zu tragenden Last ist auf dem Gehäuse - mit oder ohne Drehkranz - senkrecht zur Laufebene des Laufrades ein Befestigungsbolzen mit Außengewinde zum Durchgriff in eine Konsole mit einem entsprechenden Innengewinde angeordnet, auf welcher die von den Rollen zu tragende Last aufsetzbar, höhenverstellbar und arretierbar ist. Da der Befestigungsbolzen am Gehäuse drehbar angeordnet ist, kann er mit seinem am freien Ende vorgesehenen Mehrkantzapfen zum Aufsatz eines Schraubschlüssels oder einer Ratsche entsprechend gedreht und damit die auf ihm befindliche Konsole herauf- oder heruntergespindelt werden.

Die Teile der Hubeinrichtung und des Aufstandschuhs bestehen je nach Belastung und Einsatzzweck ganz oder teilweise aus Stahl oder Kunststoff oder aus Kombinationen dieser Werkstoffe.

Ein Ausführungsbeispiel der Erfindung ist in den Zeichnungen dargestellt. Dabei zeigen:
Fig. 1 die perspektivische Draufsicht auf die erfindungsgemäße Rolle mit einem Drehkranz und einem Befestigungsbolzen mit Außengewinde zum Durchgriff in eine Konsole mit einem entsprechenden Innengewinde,
Fig. 2 die Seitenansicht der Rolle von Fig. 1 in Richtung des Pfeiles II mit auf die Laufebene abgesenktem Laufrad und angehobener Aufstandseinrichtung,
Fig. 3 die Ansicht von Fig. 2 mit dem von der Laufebene abgehobenen Laufrad und zugleich abgesenkter Aufstandseinrichtung mittels einer an der Lagerachse angreifenden Ratsche,

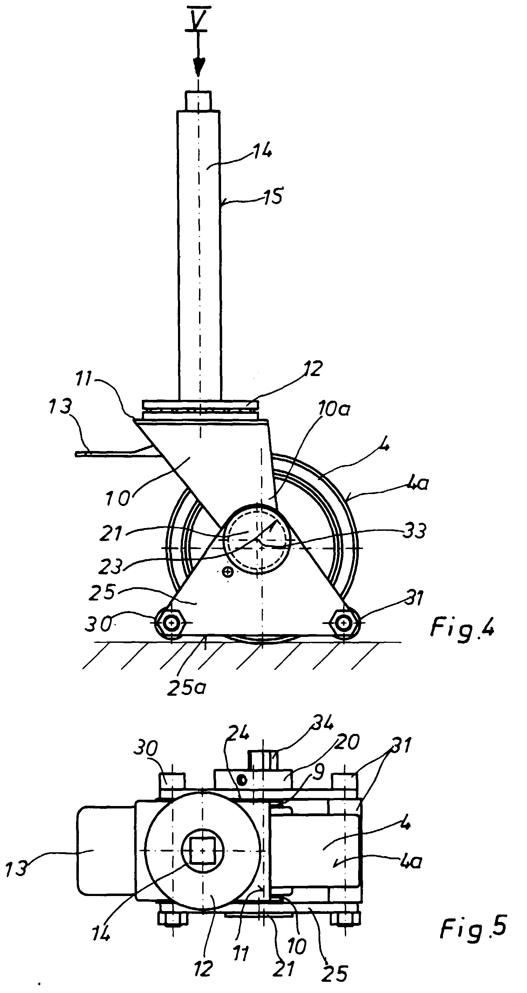

Fig. 4 die Rückansicht der Rolle in Richtung des Pfeiles IV von Fig. 1,
Fig. 5 die Draufsicht auf die Rolle in Richtung des Pfeiles V von Fig. 4,
Fig. 6 die Ansicht der Rolle in Richtung des Pfeiles VI von Fig. 2,
Fig. 7 die Schnittansicht der Rolle entlang der Linie VII-VII von Fig. 6,
Fig. 8 die Schnittansicht der Rolle entlang der Linie VIII-VIII von Fig. 2 bei abgesenktem Laufrad und angehobener Aufstandseinrichtung,
Fig. 9 die Schnittansicht entlang der Linie IX-IX von Fig. 3 bei von der Laufebene angehobenem Laufrad und zugleich abgesenkter Aufstandseinrichtung ohne Belastung und
Fig. 10 die Seitenansicht auf zwei Rollen gemäß Fig. 2 mit Drehkranz und darauf angeordneten Befestigungsbolzen mit Außengewinde, die je eine Konsole mit darauf befindlicher Last tragen.

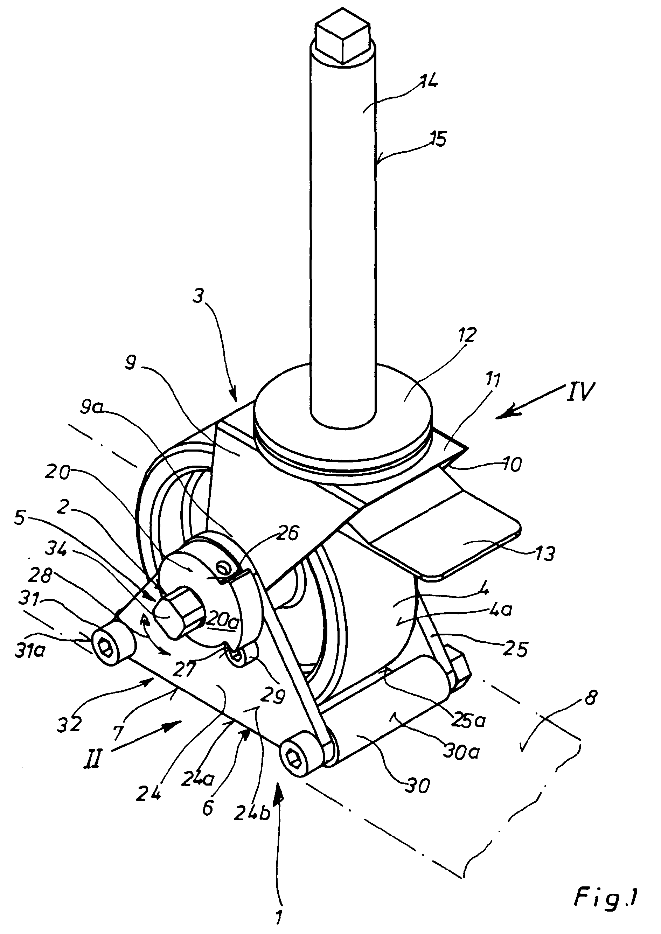

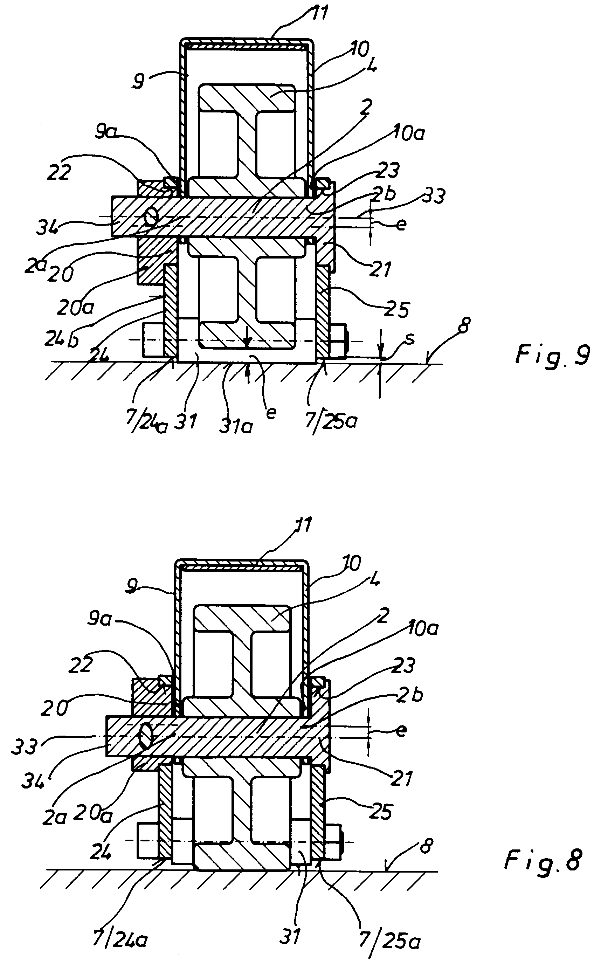

Die Rolle 1 gemäß den Figuren 1 bis 3 besteht im wesentlichen aus einer Lagerachse 2, auf welcher in einem Rollengehäuse 3 ein Laufrad 4 drehbar gelagert ist, welches zur Festsetzung gemeinsam mit seiner Lagerachse 2 und dem Gehäuse 3 über eine pauschal mit 5 bezeichnete Hubeinrichtung in eine Übertotpunktlage von ihrer Laufebene 8 anzuheben und zugleich über dieselbe Hubeinrichtung 5 eine an dem Gehäuse 3 angebrachte Aufstandseinrichtung 6 mit ihrer Gesamtstandfläche 7 auf die Laufebene 8 abzusenken ist. Das Gehäuse 3 weist eine an sich bekannte, im Querschnitt U-Form auf, deren freie Enden 9a, 10a ihrer U-Schenkel 9, 10 die Lagerachse 2 an ihren beiden Endbereichen 2a, 2b (s. Figuren 8 und 9) aufnehmen. Der Quersteg 11 des Gehäuses 3 ist mit einem an sich bekannten Drehkranz 12 mit Feststellungshebel 13 versehen, mit welchem der Drehkranz 12 in seiner Drehbeweglichkeit gesperrt werden kann. Auf dem Quersteg 11 des Gehäuses 3 ist senkrecht zur Laufebene 8 ein Befestigungsbolzen 14 mit Außengewinde 15 angeordnet, der auch auf dem Drehkranz 12 - wie dargestellt - befestigt sein kann.

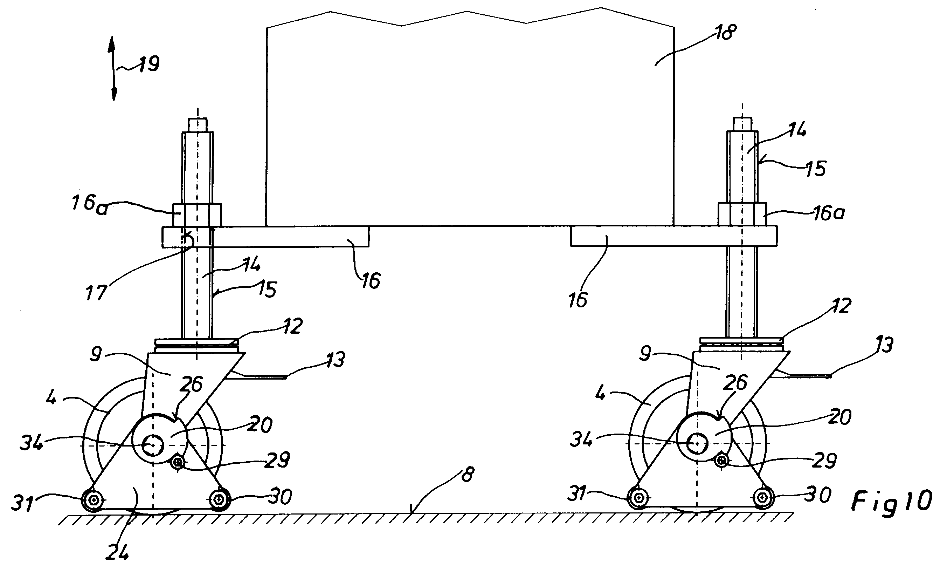

Dieser Befestigungsbolzen 14 greift mit seinem Außengewinde 15 gemäß Fig. 10 in eine Konsole 16 mit einem entsprechenden Innengewinde 17 ein, wodurch die auf den Konsolen 16 angeordnete Last 18 in beiden Richtungen des Doppelpfeiles 19 zur exakten Justierung hinauf- und hinuntergespindelt werden kann. Die Muttern 16a dienen zur Konterung.

Erfindungsgemäß besteht die Hubeinrichtung 5 aus zwei an beiden Enden 2a, 2b der Lagerachse 2 drehfest mit ihr verbundenen Exzentern 20, 21, von denen ein jeder formschlüssig in eine entsprechende kreisrunde oder ovale Ausnehmung 22, 23 (s. Figuren 8 und 9) je einer Schenkelplatte 24, 25 der Aufstandseinrichtung 6 eingreift. Der Exzenter 20 weist darüber hinaus gemäß den Figuren 1 bis 3 zwei definierte Anschlagflächen 26, 27 auf, die über die Lagerachse 2 in entgegengesetzten Drehrichtungen des Doppelpfeiles 28 von Fig. 1 gegen Anschlagvorsprung 29 auf einer der Schenkelplatten, hier der Schenkelplatte 24, drehbar sind.

Im dargestellten Fall besteht die Aufstandseinrichtung 6 aus zwei zu beiden Seiten der U-Schenkel 9, 10 des Gehäuses 3 auf der Lagerachse 2 angeordneten Schenkelplatten 24, 25, die jeweils mit einer relativ langen Standfläche 24a, 25a der Laufebene 8 des Laufrades 4 zugewandt sind. In der Nähe ihrer Enden ragen die Standflächen 24a, 25a über die jeweilige Umfangskontur 4a dessen Laufrades 4 hinaus und werden dort durch Verbindungsbolzen 30, 31 zu einem stabilen sowie relativ großflächigen Aufstandschuh 32 verbunden.

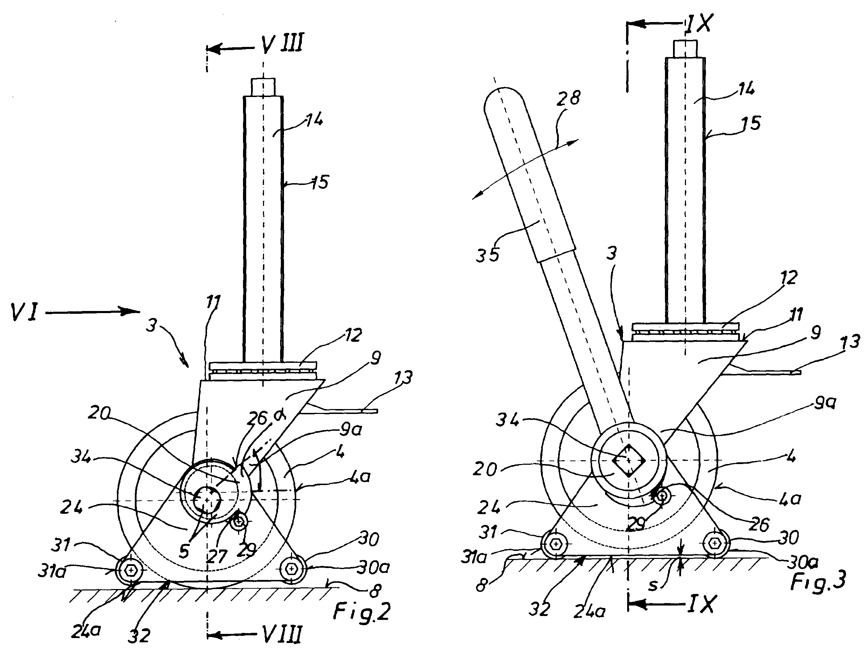

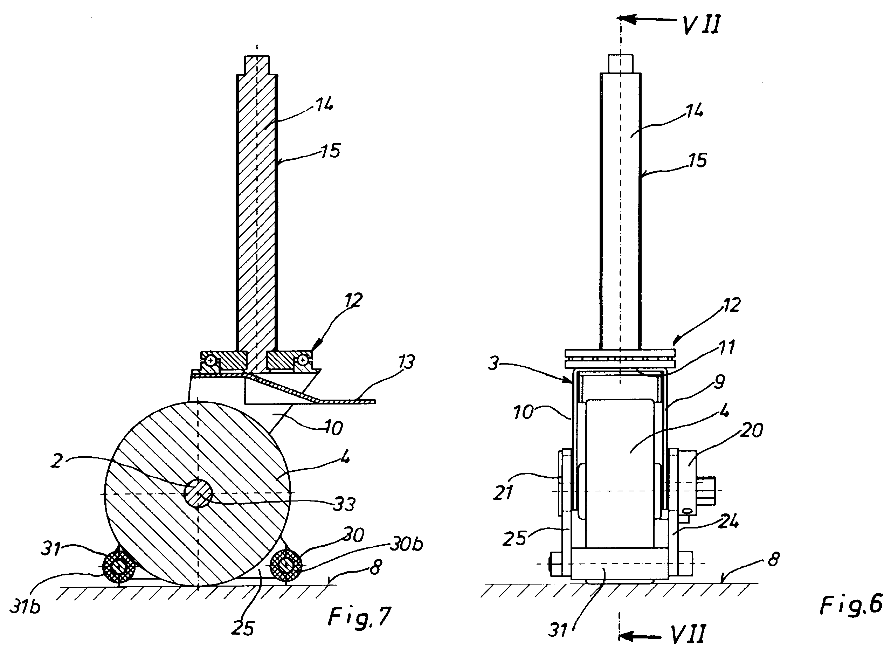

Die Verbindungsbolzen 30, 31 bilden mit ihrem Außenumfang 30a, 31a in der Aufstandslage einen Teil der Gesamtstandfläche 7 der Aufstandseinrichtung 6. Diese Verbindungsbolzen 30, 31 sind mit einem reibungserhöhenden, entropieelastischen Belag 30b, 31b versehen, der in der abgesenkten Stellung (s. Figuren 3 und 7) des Aufstandschuhs 32 unter Belastung zusammengepreßt wird. Wie die Fig. 3 zeigt, befindet sich in der Aufstandslage der Verbindungsbolzen 30, 31 die Aufstandsfläche 24a, 25a der Schenkelplatten 24, 25 noch in einem geringfügigen Abstand s oberhalb der Laufebene 8. Unter der Belastung der Last 18 von Fig. 10 hingegen werden auch die Aufstandsflächen 24a, 25a der Schenkelplatten 24, 25 nach Zusammenpressung des entropieelastischen Belages (30b, 31b) der Verbindungsbolzen 30, 31 gegen die Laufebene 8 gedrückt.

Aus diesem Grunde zeigen die Figuren mit der abgesenkten Aufstandseinrichtung 6 in den Figuren 3 und 9 einen unbelasteten Zustand der Rolle 1, weil in diesen Figuren stets noch der Spalt s zwischen den Aufstandsflächen 24a, 25a der Schenkelplatten 24, 25 sichtbar ist.

In den dargestellten Fällen weisen die Schenkelplatten 24, 25 der Aufstandseinrichtung 6 eine Dreieckform mit abgerundeten Eckenbereichen auf, die jedoch auch durch eine Trapezform ersetzt werden kann. Die Schenkelplatten 24, 25 sind an der Außenfläche des Gehäuses 3, hier also an der Außenfläche der U-Schenkel 9, 10, mit ihren kreisrunden oder ovalen Ausnehmungen 22, 23 beweglich auf den Exzentern 20, 21 angeordnet und von diesen 20, 21 anhebbar und absenkbar. Der Durchmesser oder die ovale Halbachse der Ausnehmungen 22, 23 entspricht zuzüglich einer Spielpassung für das Verschwenken etwa der Längsachse der Exzenter 20, 21.

Gemäß den Figuren 8 und 9 ist um die Exzentrizität e der Exzenter 20, 21 zur Symmetrieachse 33 der Lagerachse 2 einerseits das Laufrad 4 von der Laufebene 8 anhebbar ist und andererseits die Aufstandseinrichtung 6 absenkbar, deren Aufstandsflächen 24a, 25a ihrer Schenkelplatten 24, 25 sich nur um den geringen Spalt s über der Laufebene 8 befinden. Dieser Spalt s verschwindet jedoch bei Belastung, da dann die Aufstandseinrichtung 6 mit ihrer Gesamtstandfläche 7 auf die Laufebene 8 gedrückt wird, und zwar entgegen den Elastizitätskräften des entropieelastischen Belages 30b, 31b der Verbindungsbolzen 30, 31, der aus der Schnittansicht der Fig. 7 ersichtlich ist.

Wie aus den Figuren 1 bis 3 hervorgeht, ist die Lagerachse 2 an mindestens einem Ende mit einem mehrkantigen, im vorliegenden Fall vierkantigen Betätigungszapfen 34 zum Ansatz eines Schraubenschlüssels oder der aus Fig. 3 ersichtlichen Ratsche 35 versehen, um durch Verschwenken der Lagerachse 2 in beiden entgegengesetzten Drehrichtungen des Doppelpfeiles 28 über die Hubeinrichtung 5 die Aufstandseinrichtung 6 entweder anzuheben oder abzusenken. Im dargestellten Fall ist der Exzenter 20 mit seinem Anschlag 26 von Fig. 2 im Gegenuhrzeigersinn über die Ratsche 35 verschwenkt worden, bis diese Anschlagfläche 26 gemäß Fig. 3 den Anschlagvorsprung 29 auf der Schenkelplatte 24 erreicht hat.

Wie insbesondere aus den Figuren 8 und 9 in Verbindung mit Fig. 1 entnommen werden kann, ist einer der Exzenter 20, 21, hier der Exzenter 20, mit einem über die Außenfläche 24b der ihm zugeordneten Schenkelplatte 24 des Aufstandschuhs 32 mit einem herausragenden Exzenterteil 20a mit den beiden Anschlagflächen 26, 27 für die zwei stabilen Übertotpunktlagen versehen. Diese beiden Anschlagflächen 26, 27 gelangen je nach der Drehrichtung in Richtung des Doppelpfeiles 28 mit einem gleichfalls über die Außenfläche 24b der betreffenden Schenkelplatte 24 hinausragenden Anschlagstift 29 in Anlage, der in eine Bohrung dieser Schenkelplatte 24 eingepreßt, eingenietet oder eingeschraubt ist.

Die Teile 20, 21; 22, 23; 24, 25, 30, 31 der Hubeinrichtung 5 und des Aufstandschuhs 32 sind je nach Verwendungszweck ganz oder teilweise aus Stahl oder Kunststoff oder aus Kombinationen dieser Werkstoffe hergestellt. So können beispielsweise bei geringen Lasten im medizinischen Bereich die Rollen aus Kunststoff, hingegen bei schweren Lasten in der Industrie, beispielsweise bei Verpackungsmaschinen, aus Stahl hergestellt werden.

Es versteht sich, daß im Rahmen der Erfindung das Gehäuse 3 auch durchaus eine andere Gestaltung als die dargestellte haben kann, da dadurch die Funktion der Hubeinrichtung 5 und der Aufstandseinrichtung 6 nicht verändert werden. Der Drehkranz 12, der bei Lenkrollen unerläßlich ist, kann jedoch bei Verwendung der erfindungsgemäßen Rolle 1 als Bockrolle entfallen.

Auch die beiden Verbindungsbolzen 30, 31 zwischen den Schenkelplatten 24, 25 müssen nicht unbedingt eine Rollenform mit einem entropieelastischen Belag aufweisen, sondern gestatten auch durchaus eine andere Gestaltung, sei es als Leiste mit kreisrunder oder quaderförmiger Gestaltung.

Der Pfiff der Erfindung beruht in der Ausnutzung der vorhandenen Lagerachse 2 als Träger der auf ihr drehfest befestigten Exzenter 20, 21 in Verbindung mit den wiederum auf den Exzentern heb- und senkbar mit ihren kreisrunden oder ovalen Ausnehmungen 22, 23 angeordneten Schenkelplatten 24, 25, welche mit oder ohne Verbindungsbolzen 30, 31 die Aufstandseinrichtung 6 bzw. den Aufstandschuh 32 bilden. Dabei sind den Formen der Aufstandsflächen 24a, 25a kaum Grenzen gesetzt, soweit sie das Laufrad 4 nicht behindern.

Die Schenkelplatten 24, 25 hängen mit ihren kreisrunden oder ovalen Ausnehmungen 22, 23 wie die Perpendikel einer Uhr unter ihrer Schwerkraft auf den Gleitflächen der Exzenter 20, 21 und werden von diesen entweder angehoben oder abgesenkt. Da auf der Lagerachse 2 zwangsläufig mindestens ein Laufrad 4 angeordnet ist, wird dieses gleichfalls entweder angehoben oder abgesenkt. Dabei ist ein Absenken der Aufstandseinrichtung 6 zwangsläufig mit einem Anheben des Laufrades 4 von der Laufebene 8 verbunden und umgekehrt. Die beiden stabilen Übertotpunktlagen, die durch die definierten Anschlagflächen 26, 27 geschaffen sind und, wie aus den Figuren 2, 3 und 10 entnommen werden kann, zur Totpunktlage etwa einen Winkel a zwischen 20° und 30° einnehmen können, gewährleisten eine äußerst stabile Übertotpunktlage des Aufstandschuhs 32 bzw. des Laufrades 4 in der jeweils gewünschten Position, die auch durch zufällig auf die Rolle 1 einwirkende Kräfte nicht verändert werden kann.

## Patentansprüche

1. Rolle mit Lagerachse, auf welcher in einem Rollengehäuse ein Laufrad drehbar gelagert ist, welches zur Festsetzung gemeinsam mit seiner Lagerachse und dem Gehäuse über eine Hubeinrichtung in eine Übertotpunktlage von ihrer Laufebene anzuheben und zugleich über dieselbe Hubeinrichtung eine an dem Gehäuse angebrachte Aufstandseinrichtung mit ihrer Standfläche auf die Laufebene abzusenken ist, **dadurch gekennzeichnet**, daß die Hubeinrichtung (5) aus zwei an beiden Enden (2a, 2b) der Lagerachse (2) drehfest mit ihr verbundenen Exzentern (20, 21) besteht, von denen ein jeder formschlüssig in eine entsprechende kreisrunde oder ovale Ausnehmung (22, 23) je einer Schenkelplatte (24, 25) der Aufstandseinrichtung (6) eingreift und mindestens einer der Exzenter (20) für zwei stabile Übertotpunktlagen zwei definierte Anschlagflächen (26, 27) aufweist, die über die Lagerachse (2) in entgegengesetzten Drehrichtungen (Pfeil 28) gegen einen Anschlagvorsprung (29) auf einer der Schenkelplatten (24, 25) drehbar sind.

2. Rolle nach Anspruch 1, **dadurch gekennzeichnet**, daß die Aufstandseinrichtung (6) aus zwei zu beiden Seiten des Gehäuses (3) auf der Lagerachse (2) angeordneten Schenkelplatten (24, 25) besteht, die jeweils mit einer relativ langen Standfläche (24a, 25a) der Laufebene (8) zugekehrt sind und in deren Nähe an zwei über die jeweilige Außenumfangskontur (4a) des Laufrades (4) hinausragenden Enden über Verbindungsbolzen (30, 31) zu einem stabilen sowie relativ großflächigen Aufstandschuh (32) verbunden sind.

3. Rolle nach Anspruch 2, **dadurch gekennzeichnet,** daß die Verbindungsbolzen (30, 31) mit ihrem Außenumfang (30a, 31a) in der Aufstandslage einen Teil der Standfläche (24a, 30a, 25a, 31a) der Aufstandseinrichtung (6) bilden.

4. Rolle nach Anspruch 2 und 3, **dadurch gekennzeichnet**, daß die Verbindungsbolzen (30, 31) mit einem reibungserhöhenden, entropieelastischen Belag (30b, 31b) versehen sind, der in der abgesenkten Stellung des Aufstandschuhs (32) zusammengepreßt ist.

5. Rolle nach Anspruch 2, **dadurch gekennzeichnet**, daß die Verbindungsbolzen (30, 31) mit Abstand über der Laufebene (8) angeordnet sind sowie eine Trag- und Schwenkachse für je einen weiteren, kleineren, daran pendelnd aufgehängten Aufstandschuh (32) bilden.

6. Rolle nach einem oder mehreren der Ansprüche 1 bis 5, **dadurch gekennzeichnet**, daß die Schenkelplatten (24, 25) der Aufstandseinrichtung (6) eine Dreieck- oder Trapezform mit abgerundeten Eckenbereichen aufweisen und an der Außenfläche des Gehäuses (3) mit ihren kreisrunden oder ovalen Ausnehmungen (22, 23) beweglich auf den Exzentern (20, 21) ange. ordnet sowie von diesen anhebbar und absenkbar sind.

7. Rolle nach einem oder mehreren der Ansprüche 1 bis 6, **dadurch gekennzeichnet**, daß die Lagerachse (2) an mindestens einem Ende mit einem im Querschnitt mehreckigen Betätigungszapfen (34) zum Ansatz eines Schraubschlüssels oder einer Ratsche (35) zur Anhebung oder Absenkung des Aufstandschuhs (32) über die Exzenter (20, 21) versehen ist.

8. Rolle nach einem oder mehreren der Ansprüche 1 bis 7, **dadurch gekennzeichnet**, daß das Gehäuse (3) eine an sich bekannte im Querschnitt U-Form aufweist, deren freie Enden (9a, 10a) der U-Schenkel (9, 10) die Lagerachse (2) an ihren beiden Endbereichen (2a, 2b) aufnehmen und deren Quersteg (11) mit einem an sich bekannten Drehkranz (12) mit Feststellungshebel (13) versehen ist.

9. Rolle nach einem oder mehreren der Ansprüche 1 bis 8, **dadurch gekennzeichnet,** daß einer (20) der Exzenter (20, 21) über die Außenfläche (24b) der ihm zugeordneten Schenkelplatte (24) des Aufstandschuhs (32) hinausragt und an diesem herausragenden Exzenterteil (20a) mit den beiden Anschlagflächen (26, 27) für die zwei stabilen Übertotpunktlagen versehen ist.

10. Rolle nach einem oder mehreren der Ansprüche 1 bis 9, **dadurch gekennzeichnet**, daß der Winkel (a) zwischen einer Totpunktlage und einer Anschlagfläche (26, 27) etwa zwischen 20° und 30° liegt.

11. Rolle nach einem oder mehreren der Ansprüche 1 bis 10, **dadurch gekennzeichnet,** daß der Anschlagvorsprung (28) aus einem über die Außenfläche (24b) der Schenkelplatte (24) mit dem hinausragenden Exzenterteil (20a) vorspringenden Anschlagstift (28) besteht, der in einer Bohrung dieser Schenkelplatte (24) des Aufstandschuhs (32) eingepreßt, eingenietet oder eingeschraubt ist.

12. Rolle nach einem oder mehreren der Ansprüche 1 bis 11, **dadurch gekennzeichnet**, daß auf dem Gehäuse (3) senkrecht zur Laufebene (8) des Laufrades (4) ein Befestigungsbolzen (14) mit Außengewinde (15) zum Durchgriff in eine Konsole (16) mit einem entsprechenden Innengewinde (17) angeordnet ist, auf welcher (16) die von den Rollen (1) zu tragende Last (18) aufsetzbar, höhenverstellbar und arretierbar ist.

13. Rolle nach einem oder mehreren der Ansprüche 1 bis 12, **dadurch gekennzeichnet,** daß die Teile (20, 21; 22, 23; 24, 25, 30, 31) der Hubeinrichtung (5) und des Aufstandschuhs (32) ganz oder teilweise aus Stahl oder Kunststoff oder aus Kombinationen dieser Werkstoffe hergestellt sind.
